# EUROPEAN PATENT APPLICATION

(11) **EP 1 970 249 A2**
(43) Date of publication of application: **17.09.2008**
(21) Application number: 08004302.9
(22) Date of filing: 07.03.2008
(51) Int. Cl.: B60Q 1/08

(54) **Vehicle operation support method and system**

(30) Priority: 15.03.2007 JP 2007067045
(71) Applicant: Mazda Motor Corporation, Aki-gun, Hiroshima 730-8670 (JP)
(72) Inventor: Omura, Hiroshi, Aki-gun Hiroshima 730-8670 (JP)
(74) Representative: Müller-Boré & Partner Patentanwälte

(57) **Abstract**

The present invention relates to a vehicle support system and an associated method of improving a driver's visibility. The vehicle may be equipped with at least one UV light which irradiates the ambient environment with UV radiation. In some examples, the direction or the intensity of UV radiation may be changed in response to vehicle and environment variables.

## Description

The present invention relates to a vehicle operation support method or system. More particularly, the invention relates to a method or system for improving a driver's visibility over obstacles, such as a pedestrian in an ambient environment of the vehicle.

Vehicle manufacturers have addressed the development and evolution of various methods and systems, which improve the safety performance of vehicles. One attempt to improve a driver's visibility is a method for providing headlights that irradiate the front area of the vehicle with ultra-violet (UV) radiation to improve visibility of a pedestrian in a front area of the vehicle during night driving. One example of this method is described by Japanese Unexamined Patent Application Publication No. 2000-203335. The method described in this reference comprises providing UV light to irradiate the area in front of a vehicle with UV radiation as well as irradiating with UV radiation when a pedestrian is detected in front of the vehicle. According to this method, the UV radiation interacts with a pedestrian's clothes and produces fluorescence, thereby allowing the driver to recognize the pedestrian more clearly.

Another example of this method is described by Japanese Unexamined Patent Application Publication No. 2000-027128A. The method described in this reference comprises providing UV light that irradiates the area in front of a vehicle with UV radiation to irradiate white lines on the road or road signs, which include fluorescent material capable of interacting with UV radiation. According to this method, UV radiation interacts with the fluorescent material included in the white lines or road signs, thereby allowing the driver to recognize them more clearly in conditions of poor visibility, such as in rainy weather at night.

In one approach, a method of improving the a driver's visibility of the environment outside a vehicle equipped with at least one UV light which irradiates the ambient environment of said vehicle with UV radiation is provided. This method comprises irradiating the ambient environment of the vehicle with UV radiation from the UV light and changing a direction of irradiation of the UV radiation.

In another approach, a method of improving a driver's visibility of the environment outside a vehicle equipped with at least one UV light which irradiates the ambient environment of the vehicle with UV radiation, while a sensor detects an object in the ambient environment of the vehicle is provided. This method comprises changing the direction of UV irradiation according to a detection result of the sensor.

In another approach, a method of improving a driver's visibility of the environment outside a vehicle equipped with at least one UV light which irradiates the ambient environment of the vehicle with UV radiation and a sensor that detects an object in the ambient environment of the vehicle is provided. This method comprises changing an intensity of the UV radiation reaching the object detected by the sensor according to a determined type of the object. As one of the examples, when an object is a pedestrian, the intensity is made lower.

In this way, a driver's visibility of an obstacle existing in the ambient environment of the vehicle may be improved, while the negative influence of UV radiation on the pedestrian may be reduced.

It is an object of the invention to improve the obstacle detection.

This object is solved according to the invention by the features of the independent claims. Preferred embodiments of the invention are subject of the dependent claims.

According to one aspect of the invention, there is provided a method of improving a driver's visibility of the environment outside a vehicle equipped with at least one UV light which irradiates the ambient environment of said vehicle with UV radiation, the method comprising:
irradiating the ambient environment of said vehicle with UV radiation from said UV light; and
changing or modifying or controlling a direction and/or angular distribution of irradiation of said UV radiation.

According to one particular example, said vehicle is equipped with at least one sensor which can detect at least one object in the ambient environment of said vehicle; and said changing the direction and/or angular distribution of irradiation of UV radiation includes changing the direction and/or angular distribution according to a detection result of said sensor.

According to one particular example, the method further comprises determining a collision possibility of the object with said vehicle detected by said sensor; wherein said changing the direction and/or angular distribution of irradiation of said UV radiation includes directing the direction and/or angular distribution to said object upon it being determined that the object has a specified (predetermined or predeterminable) degree of the collision possibility with the vehicle.

According to one particular example, the method further comprises changing an intensity of said UV radiation reaching said object detected by said sensor according to a determined type of said object.

According to one particular example, said intensity of said UV radiation reaching said object is set to a first intensity when said object is not determined to be a pedestrian and wherein said intensity is set to a second intensity that is lower than said first intensity when said object is determined to be a pedestrian.

According to one particular example, changing the direction and/or angular distribution of irradiation of said UV radiation irradiated from said UV light occurs when a plurality of objects are detected by said sensor.

According to one particular example, the method further comprises setting an order of priority for each object according to a degree of risk of collision of each object with said vehicle; wherein said changing the direction and/or angular distribution of irradiation of said UV radiation includes changing the direction and/or angular distribution according to said order of priority of each object.

According to one particular example, selecting at least one object from said plurality of objects on the basis of said order of priority; wherein said changing the direction and/or angular distribution of irradiation of said UV radiation includes directing said UV radiation to selected objects.

According to one particular example, the method further comprises calculating or determining the center position of said plurality of objects along a vehicle width direction and/or a vehicle longitudinal direction; wherein said changing the direction and/or angular distribution of irradiation of said UV radiation includes directing said UV radiation to said center position.

According to one particular example, the changing the angular distribution of the UV radiation comprises expanding the irradiation range of said UV radiation when a plurality of objects are detected by said sensor.

According to one particular example, said vehicle is equipped at least with a right UV light on a right-hand side of a vehicle body and a left UV light on a left-hand side of said vehicle body, the method further comprising: determining whether said object detected is on a right-hand side of said vehicle or on a left-hand side of said vehicle; wherein irradiating said object on the right-hand side is accomplished with UV radiation from said right UV light and irradiating said object on the left-hand side is accomplished with UV radiation from said left UV light.

According to a further aspect of the invention, there is provided a computer program product, in particular embodied on a computer-redable storage medium, as a signal or data stream, comprising computer readable instructions which, when loaded and executed on a suitable system perform the steps of a method according to the above aspect or examples.

According to a further aspect of the invention, there is provided a vehicle operation support system, comprising:
at least one UV light irradiating an ambient environment of a vehicle;
at least one actuator capable of changing or modifying or controlling a direction and/or angular distribution of UV irradiation from the UV light; and
a controller configured to control said at least one actuator.

According to one particular example, the system further comprises: at least one sensor which detects an object in the ambient environment of said vehicle and that is capable of communicating with said controller; wherein said controller is configured to control said actuator according to an input from said sensor.

According to one particular example, said controller is configured to determine a collision possibility of the object detected by said sensor with said vehicle, and wherein the controller controls said actuator such that said direction and/or angular distribution of irradiation is directed to said object upon determining that the object has a specified (predetermined or predeterminable) degree of collision possibility.

According to one particular example, the system further comprises an intensity changing mechanism for changing an intensity of said UV radiation reaching said object detected by said sensor; wherein said controller is configured to determine a type of said object and is configured to control said intensity changing mechanism according to the determined type of object.

According to one particular example, said controller is configured to determine whether said object detected by said sensor is a pedestrian or not, and to control said intensity changing mechanism such that an intensity of said UV radiation reaching said object is set to a first intensity when said object is not determined to be a pedestrian and said intensity is set to a second intensity that is lower than said first intensity when said object is determined to be a pedestrian.

According to one particular example, said controller is configured to change said actuator control when a plurality of objects are detected by said sensor.

According to one particular example, said controller is configured to set an order of priority for each object according to a degree of risk of collision with the vehicle when a plurality of objects are detected by said sensor, and to change the direction and/or angular distribution of irradiation of said UV radiation according to said order of priority for each object.

According to one particular example, said controller is configured to select at least one object from said plurality of objects on the basis of said order of priority and to direct said UV radiation to selected objects.

According to one particular example, said controller is configured to calculate the center position of said plurality of objects along a vehicle width direction and/or a vehicle longitudinal direction and to direct said UV radiation to said center position.

According to one particular example, said controller is configured to expand the irradiation range of said UV radiation when a plurality of objects are detected by said sensor.

According to one particular example, a right UV light which irradiates a vehicle right side front area with UV radiation is provided on a right-hand side of a vehicle front body, a left UV light which irradiates a vehicle left side front area with UV radiation is provided on a left-hand side of said vehicle front body, the system further comprising: a first actuator capable of changing the direction and/or angular distribution of said UV radiation from said right UV light; and a second actuator capable of changing the direction and/or angular distribution of said UV radiation from said left UV light.

According to one particular example, said controller is configured to determine whether said object is on a right-hand side of said vehicle or a on a left-hand side of said vehicle, to control said first actuator such that said first UV light irradiates said object when said object is on the right-hand side of said vehicle and to control said second actuator such that said second UV light irradiates said object when said object is on the left-hand side of said vehicle.

These and other objects, features and advantages of the present invention will become more apparent upon reading of the following detailed description of preferred embodiments and accompanying drawings. It should be understood that even though embodiments are separately described, single features thereof may be combined to additional embodiments.

Fig. 1A is a block diagram showing a system configuration of a vehicle operation support system for a vehicle according to an embodiment of the invention, and Figs. 1B and 1C are schematic views showing implementations of the UV light device on the vehicle.

Fig. 2 is a flowchart showing an operational procedure of the vehicle operation support system shown in Fig. 1A.

Figs. 3A and 3B, 4A and 4B, and 5A and 5B are schematic views showing illumination patterns by the vehicle operation support system in accordance with the operational procedure shown in Fig. 2.

Hereinafter, several embodiments of the present invention will be explained in detail with reference to the appended drawings. In the drawings, like reference numerals indicate like portions and, thus, explanation thereof will not be repeated.

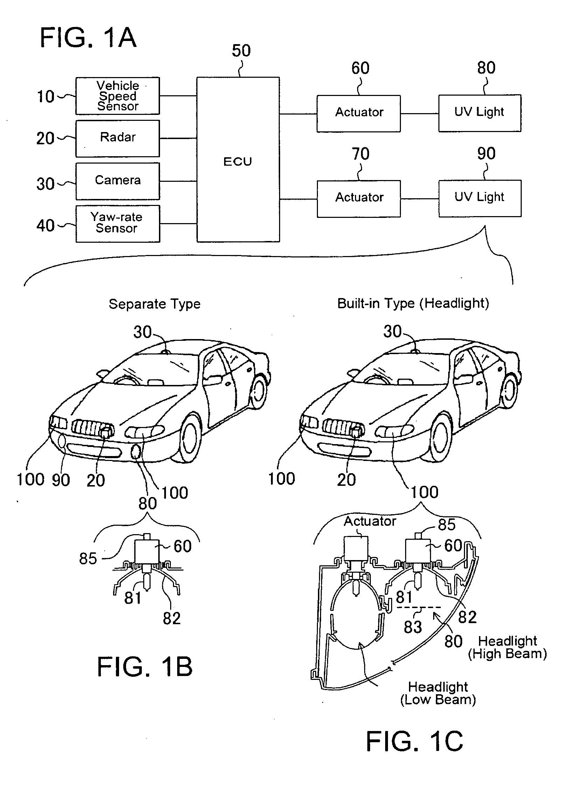

Fig. 1A shows a system configuration of a vehicle operation support system for a vehicle according to one preferred embodiment of the invention. In Fig. 1A, this vehicle operation support system includes at least one vehicle-speed sensor 10, at least one radar 20, at least one camera 30, at least one yaw-rate sensor 40, an electronic control unit (ECU) 50, one or more actuators 60 and 70, and one or more UV light devices 80 and 90.

The vehicle-speed sensor 10 detects or determines a traveling speed of the vehicle. Referring to Figs. 1B and 1C, the radar 20 is disposed particularly in proximity to or on a radiator grill on or near the vehicle's front face, and the camera 30 is disposed particularly at or near a front end of an inner roof inside the vehicle cabin or at or near a front end of outer roof. The radar 20 and camera 30 are used to detect or determine a distance to an object substantially in front of the vehicle, that is, in a front area of the vehicle, a shape of the object and/or a direction of the object with respect to the vehicle's heading or driving direction, etc. The yaw-rate sensor 40 detects or determines a yaw rate of the vehicle to estimate the vehicle's heading or vehicle direction along with the vehicle-speed sensor 10. ECU 50 typically is a computer that performs various calculations for the drive-assist functions, as described below.

The UV light device(s) 80 and/or 90 is/are disposed particularly on or near the front face of the vehicle on the lateral (left and/or right) sides, respectively, to illuminate UV light (particularly a frequency in the range of 400 nm to 200 nm) in a specified (predetermined or predeterminable) direction, preferably substantially ahead of the vehicle. Preferably, 315 nm or longer wavelengths (particularly a frequency in the range of 400 nm to 315 nm) may be used for the UV light illuminated from UV light devices 80 and 90. UV light of this wavelength typically is classified as "UV-A," which may have almost no influence on the human body. UV light devices 80 and 90 may, for example, be configured with light emitting diodes (LEDs).

Actuator(s) 60 and/or 70 change(s) the direction(s) of the UV light or light conus from the UV light devices 80 and/or 90. Further, the actuators 60 and 70 diffuse/centralize the UV light fluxes from the UV light devices 80 and 90 to expand/narrow illumination ranges or conuses. In other words, the actuator 60/70 may vary or control the lateral and/or vertical light emission or expansion of the UV light device 80/90. Further, actuators 60 and 70 change illumination output levels or intensity of UV light from UV light devices 80 and 90.

### IMPLEMENTATION OF UV LIGHT DEVICES 80 AND 90

The implementation of UV light devices 80 and 90 typically includes a "separate type" and/or a "built-into-headlight type."

One example of the "separate type" is shown in Fig. 1B, and this type is configured such that UV light devices 80 and 90 are separated from generally equipped headlights 100, which illuminate ahead of the vehicle with visible light. In this embodiment, configurations of the headlights 100 are know to those skilled in the art and, thus, explanation thereof will be omitted.

The UV light is emitted from light-source valve or bulb or device 81 of UV light device 80, and the UV light is then reflected substantially ahead of the vehicle by at least one optical element, preferably comprising at least one adjustable reflector 82 and/or at least one lens device. Actuator 60 actuates the optical element, preferably rotates or pivots or displaces adjustable reflector 82 and/or the lens device in the vertical and/or horizontal directions, to change the direction of UV light illumination. Further, actuator 60 can change or control a spatial relationship between light-source valve 81 and the optical element (particularly the adjustable reflector 82 and/or the lens device) to diffuse/centralize the light flux of the UV light so as to expend or narrow the illumination range of the UV light (i.e., the illumination angle) in lateral and/or vertical direction.

In this embodiment, UV light device 90 has a similar structure and operation to UV light device 80 and, thus, explanation thereof will be omitted. Further, UV light devices 80 and 90 may also include an intensity changing mechanism 85 for changing intensities of the UV light by adjusting current applied to the light-source valves of UV light devices 80 and 90.

Turning to Fig. 1C, for the "built-into-headlight type," UV light devices 80 and 90 comprise one or more high-beam units of headlights 100 for illuminating in front of the vehicle with visible light.

For example, in UV light device 80, light-source valve or bulb or device 81 emits UV light as well as visible light. In other words, the light-source valve or bulb or device 81 emits light in a frequency range comprising not only Uvlight, but also other components such as visible light. However, preferably only UV light (preferably UV-A light) penetrates or passes at least one filter 83 to illuminate substantially ahead of the vehicle. Further, similar to the "separate type" described above, the illumination direction and/or illumination range or spread (angular width) of the UV light are controlled by (preferably each of) the actuator(s) 60 and/or 70. In this embodiment, the filter 83 preferably does not function or is inactive when illuminating with visible light ahead of the vehicle (i.e., when the low and/or high beam is turned on). Further, the control of the illumination direction(s) and/or the illumination range(s) or spread(s) by actuator(s) 60 and/or 70 preferably is not performed when illuminating with visible light in front of the vehicle (i.e., when the low and/or high beam is turned on). This is because an operator of an oncoming vehicle may be dazzled by the visible light. Further, UV light devices 80 and 90 may further include at least one UV-cut filter (not illustrated) that functions (i.e. reduces or eliminates or adsorbs UV-light) when illuminating with visible light ahead of the vehicle (i.e., when the low and/or high beam is turned on).

In this embodiment, a low-beam unit of headlight 100 is configured so that an illumination axis thereof is adjustable in any direction by the actuator preferably in accordance with a steering angle of the vehicle and/or a speed of the vehicle (referred to as an "Adaptive Front Lighting System").

### OPERATION PROCEDURE

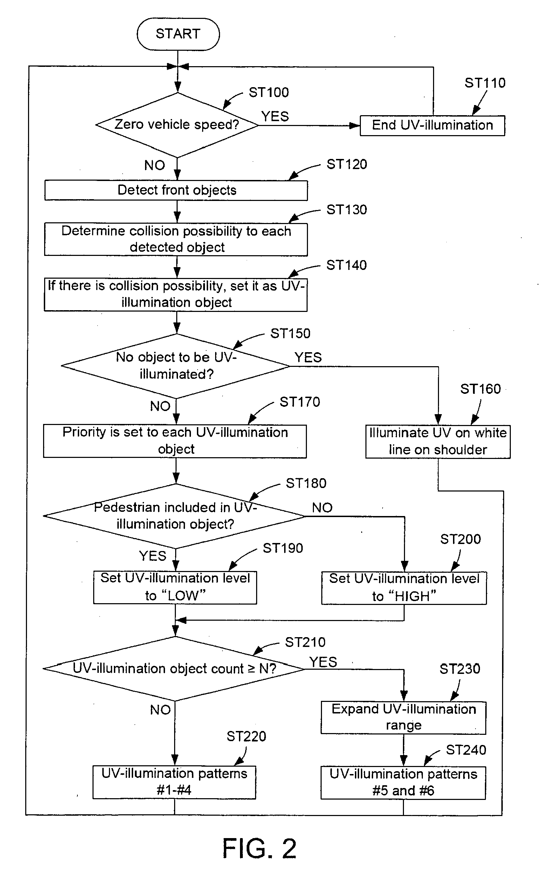

Next, referring to a flowchart of Fig. 2, an operation of the vehicle operation support system for the vehicle configured as described above will be explained.

First, in ST100, ECU 50 determines whether a traveling speed detected by vehicle-speed sensor 10 is zero or below a specified (predetermined or predeterminable) threshold. When the traveling speed is determined to be zero or below the specified (predetermined or predeterminable) threshold, then, in ST110, ECU 50 instructs a termination of the UV light illumination to actuator(s) 60 and/or 70 and UV light device(s) 80 and/or 90.

On the other hand, when the traveling speed is determined to be non-zero or not below the specified (predetermined or predeterminable) threshold, then, in ST120, ECU 50 performs an "object-detection process." The object-detection process may be performed by cooperation of radar 20, camera 30, yaw-rate sensor 40, and ECU 50, as follows.

First, ECU 50 estimates the vehicle's heading or traveling direction by a method based on the detected information from vehicle-speed sensor 10 and/or yaw-rate sensor 40. The radar 20 and/or the camera 30 detect at least one object that exists substantially ahead of the estimated heading or traveling direction of the vehicle. Next, ECU 50 calculates or determines a distance to the detected object, a shape of the object, a moving direction of the object and/or a moving speed of the object, etc.

In this embodiment, the estimation of the vehicle's heading or traveling direction may be performed using a steering angle sensor and/or a steering angular velocity sensor, etc.

Next, in ST130, ECU 50 determines an existence of collision possibility of the vehicle to each of the detected objects. The determination of the existence of collision possibility may be performed by a method based on information including the moving speed and/or trace of the object, the traveling speed and/or trace of the vehicle, etc.

Next, in ST140, ECU 50 sets the object determined to be "collision possibility exists" in Step ST130 to an object to be UV-illuminated. On the other hand, when there is no object to be UV-illuminated in ST150, ECU 50 then proceeds to Step ST160, or otherwise, ECU 50 proceeds to Step ST170.

In ST160, ECU 50 performs a control in which the UV light illuminated from UV light devices 80 and 90 are directed on a white line of a road shoulder and/or on a median strip between two lanes.

ECU 50 may recognize the white line of the road based on the information from camera 30 or yaw-rate sensor 40, and may calculate or determine the illumination directions (i.e., light-distribution angle(s)) of UV light devices 80 and 90. Preferably, in order to perform light distribution control suitable for an actual road shape (e.g., a shape of a curve), the light-distribution angle may be calculated or determined according to a function of a relief curve, such as a clothoid curve.

Then, ECU 50 causes actuators 60 and 70 to actuate the optical element (particularly to rotate or pivot or displace the adjustable reflectors 82 and/or the lens device) based on the calculated or determined light-distribution angles so that the UV light from UV light devices 80 and 90 illuminate the specified (predetermined or predeterminable) portion (e.g. the white line) of the road.

In ST170, ECU 50 assigns priorities to the objects to be UV-illuminated. The priorities may be determined based on a degree of danger to the vehicle which may be based on a distance of the object to the vehicle and/or a degree of the collision possibility, or the like.

For example, the degree of collision possibility may be represented by an expected time to collision that can be calculated or determined based on a object's moving vector and/or a vehicle's traveling vector (for example, a width of the traveling vector may be set to the vehicle width).

Further, the priorities may be determined based on whether the object to be UV-illuminated is a pedestrian. For example, if the objects are determined to be a pedestrian, a road sign, and a road marking, the pedestrian is set to the highest priority.

Next, in ST180, ECU 50 determines whether a pedestrian is included among the objects to be UV-illuminated. This determination may be performed by checking whether a ratio of the detected object's width and/or height is within a predetermined or predeterminable range.

When a pedestrian is determined to be included, then, in ST190, ECU 50 causes actuators 60 and 70 to preferably set the illumination output levels of UV light devices 80 and 90 to "LOW" levels. In response to this, ECU 50 also causes actuators 60 and 70 to preferably set the illumination output levels of UV light devices 80 and 90 to "LOW" levels. In this embodiment, the "LOW" level is considered to be a UV-illumination output or intensity level and/or frequency having little or no influence on the human body. Thus, because the illumination output of the UV light is set to LOW when a pedestrian is included among the objects to be UV illuminated, the influence on the human body is little or none.

On the other hand, when a pedestrian is determined not to be included among the objects to be UV illuminated, then, in ST200, ECU 50 preferably causes actuators 60 and 70 to set the illumination output levels of UV light devices 80 and 90 to "HIGH" levels. In response to this, ECU 50 also causes actuators 60 and 70 to preferably set the illumination output levels of the UV light devices 80 and 90 to "HIGH" levels. In this embodiment, the "HIGH" level may be a predetermined output or intensity level that is higher than the respective "LOW" level.

Next, in ST210, ECU 50 determines whether a count of the objects to be UV-illuminated is more than N (in this embodiment, N= 5). This determination may be performed in order to form a suitable UV-illumination pattern for a case where the count of the objects is relatively large (more than N), or a case where the count is less than N.

When the count of the objects to be UV-illuminated is determined to be less than N (less than or equal four in this example), then, in ST220, ECU 50 may perform one of the following UV-illumination patterns #1 through #4.

### UV-ILLUMINATION PATTERN #1

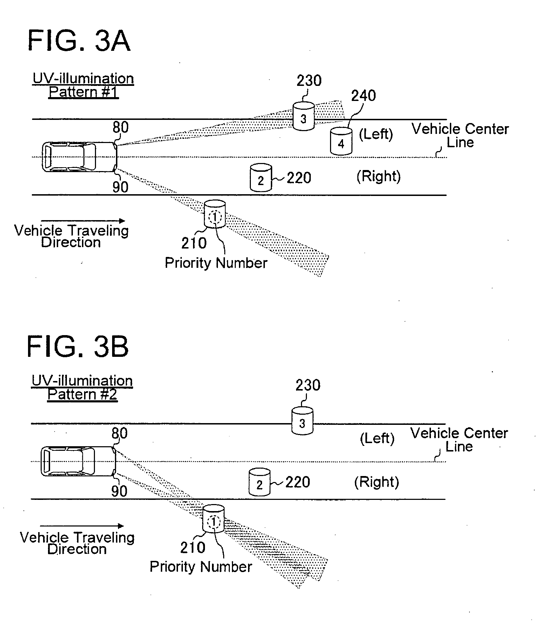

As shown in Fig. 3A, in UV-illumination pattern #1, the right-side UV light device 90 illuminates an object 210 to which the highest priority is assigned among objects 210 and 220 that exist on a lateral side (e.g. the right side) with respect to the vehicle center axis, and left-side UV light device 80 illuminates an object 230 to which the highest priority is assigned among objects 230 and 240 that exist in the opposite lateral side (e.g. the left side) with respect to the vehicle center axis. This pattern control is performed as follows.

ECU 50 determines whether object 210 to which the highest priority was assigned in Step ST170 exists either on the right side or the left side with respect to the vehicle center axis. In the example of Fig. 3A, object 210 is determined to be located on the right side. Next, ECU 50 calculates or determines a light-distribution angle (particularly the axis of the light-beam and/or the spread thereof) to at least partly direct the UV light illuminated from a UV light device on the side according to the determination (in this example, the right-side UV light device 90) to object 210. Then, actuator 70 actuates the optical element (preferably rotates or pivots or displaces the adjustable reflector 82 and/or the optical lens) based on the light-distribution angle calculated or determined by ECU 50 to at least partly illuminate object 210 with the UV light from the UV light device 90.

On the other hand, for the opposite side of the determination (i.e., left side in the example of Fig. 3A), ECU 50 specifies object 230 to which the highest priority was assigned on this side. Next, ECU 50 calculates or determines a light-distribution angle (particularly the axis of the light-beam and/or the spread thereof) to at least partly direct the UV light illuminated from the left-side UV light device 80 to object 230. Then, actuator 60 actuates the optical element (preferably rotates or pivots or displaces the adjustable reflector 82 and/or the optical lens) based on the light-distribution angle calculated or determined by ECU 50 to at least partly illuminate object 230 with the UV light from UV light device 80.

### UV-ILLUMINATION PATTERN #2

As shown in Fig. 3B, in UV-illumination pattern #2, the highest-priority object 210 among the objects 210-230 that exist ahead of the vehicle is illuminated by the UV light devices 80 and 90 on both the left-and-right sides. This pattern control is performed as follows.

First, ECU 50 determines whether object 210 to which the highest priority was assigned in Step ST170 exists either on the right side or the left side with respect to the vehicle center axis. In the example of Fig. 3B, ECU 50 determines that the object 210 exists on the right side. Next, ECU 50 calculates or determines a light-distribution angle (particularly the axis of the light-beam and/or the spread thereof) to at least partly direct the UV light illuminated from a UV light device on the side according to the determination (that is, the right-side UV light device 90 in the example of Fig. 3B) to object 210. Then, actuator 70 actuates the optical element (preferably rotates or pivots or displaces the adjustable reflector 82 and/or the optical lens) based on the light-distribution angle calculated or determined by ECU 50 to at least partly illuminate object 210 with the UV light from UV light device 90. On the other hand, for the opposite side, ECU 50 calculates or determines a light-distribution angle (particularly the axis of the light-beam and/or the spread thereof) to at least partly direct the UV light illuminated from the UV light device on the opposite side of the determination (that is, the left-side UV light device 80 in the example of Fig. 3B) to object 210. Then, actuator 60 actuates the optical element (preferably rotates or pivots or displaces the adjustable reflector 82 and/or the optical lens) based on the light-distribution angle calculated or determined by ECU 50 to at least partly illuminate object 210 with the UV light from UV light device 80.

### UV-ILLUMINATION PATTERN #3

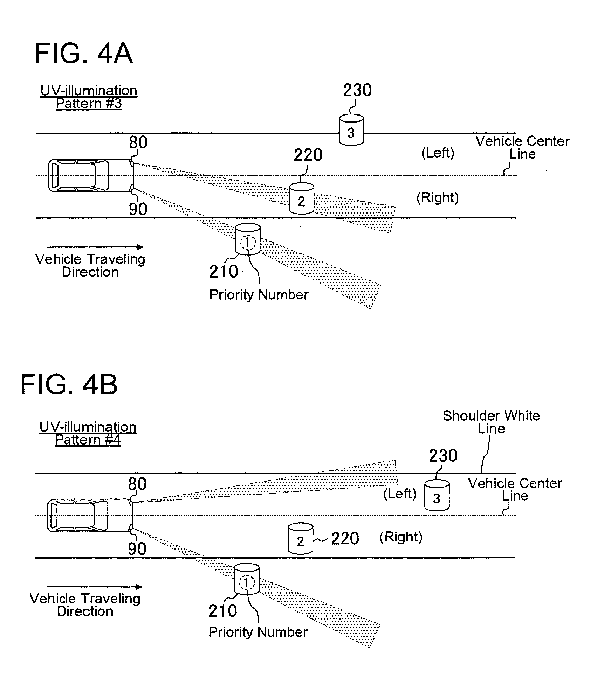

As shown in Fig. 4A, in UV-illumination pattern #3, the highest-priority object 210 among the objects 210-230 that exist ahead of the vehicle preferably is illuminated by UV light device 90 on the same side as the object, and the second-highest-priority object 220 is illuminated by the UV light device 80 on the opposite side. This pattern control is performed as follows.

First, ECU 50 determines whether object 210 to which the highest priority was assigned in Step ST170 exists either on the right side or the left side with respect to the vehicle center axis. In the example of Fig. 4A, ECU 50 determines that object 210 exists on the right side. Next, ECU 50 calculates or determines a light-distribution angle (particularly the axis of the light-beam and/or the spread thereof) to at least partly direct the UV light illuminated from a UV light device on the side according to the determination (that is, the right-side UV light device 90in the example of Fig. 4A) to object 210. Then, actuator 70 actuates the optical device (preferably rotates or pivots or displaces the adjustable reflector 82 and/or the optical lens) based on the light-distribution angle calculated or determined by ECU 50 to at least partly illuminate object 210 with the UV light from the UV light device 90. Further, ECU 50 calculates or determines a light-distribution angle (particularly the axis of the light-beam and/or the spread thereof) to at least partly direct the UV light illuminated from the UV light device on the opposite side to the determination (that is, the left-side UV light device 80 in the example of Fig. 4A) to object 220 to which the second highest priority was assigned in Step ST170. Then, the actuator 60 actuates the optical element (preferably rotates or pivots or displaces adjustable reflector 82 and/or the optical lens) based on the light-distribution angle calculated by ECU 50 to at least partly illuminate object 220 with the UV light from UV light device 80.

### UV-ILLUMINATION PATTERN #4

As shown in Fig. 4B, in UV-illumination pattern #4, the highest-priority object 210 among the objects 210-230 that exist ahead of the vehicle is illuminated by UV light device 90 on the same side as the object 210, while UV light device 80 on the opposite side illuminates the white line of the road shoulder. This pattern control is performed as follows.

First, ECU 50 determines whether object 210 to which the highest priority was assigned in Step ST170 exists either on the right side or the left side with respect to the vehicle center axis. In the example of Fig. 4B, ECU 50 determines that object 210 exists on the right side. Next, ECU 50 calculates or determines a light-distribution angle (particularly the axis of the light-beam and/or the spread thereof) to at least partly direct the UV light illuminated from a UV light device on the side according to the determination (that is, the right-side UV light device 90 in the example of Fig. 4B) to object 210. Then, actuator 70 actuates the optical element (preferably rotates or pivots or displaces adjustable reflector 82 and/or the optical lens) based on the light-distribution angle calculated or determined by ECU 50 to at least partly illuminate object 210 with the UV light from UV light device 90.

Further, ECU 50 calculates a light-distribution angle (particularly the axis of the light-beam and/or the spread thereof) to at least partly direct the UV light illuminated from a UV light device on the opposite side of the determination (that is, the left-side UV light device 80 in the example of Fig. 4B) to the white line of the road shoulder and/or to the median line. This process is performed similar to Step ST160. Then, actuator 60 actuates the optical element (preferably rotates or pivots or displaces the adjustable reflector 82 and/or the optical lens) based on light-distribution angle calculated or determined by ECU 50 to at least partly illuminate the white line of the road (shoulder and/or median line) with the UV light from UV light device 80.

When the count of the objects to be UV-illuminated is determined to be more than N (in this example, five) in Step ST210, then, in ST230, ECU 50 preferably causes one or more actuators 60 and 70 to expand the illumination range (or to widen the illumination conus in lateral and/or vertical direction) of the UV light illuminated from UV light devices 80 and 90. In response to this, actuators 60 and 70 each preferably controls the spatial relationship between light-source valve 81 and adjustable reflector 82 and/or the lens to expand the illumination range (i.e., illumination angle) of the UV light by diffusing the UV light flux illuminated from UV light devices 80 and 90.

Then, in ST240, ECU 50 performs one of the following UV-illumination patterns #5 and #6.

### UV-ILLUMINATION PATTERN #5

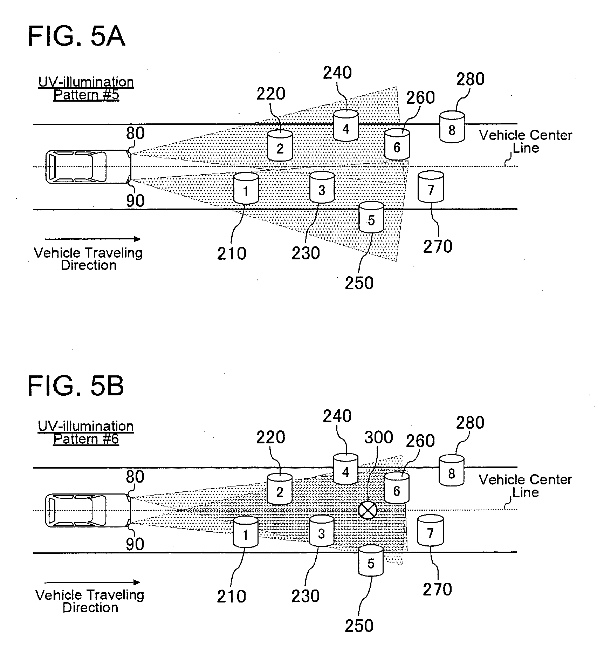

As shown in Fig. 5A, in UV-illumination pattern #5, the highest-priority object 210 among objects 210, 230, 250, and 270 that exist on the right side with respect to the vehicle center axis is illuminated by the right-side UV light device 90, while the highest-priority object 220 among objects 220, 240, 260, and 280 that exist on the left side with respect to the vehicle center axis is illuminated by left-side UV light device 80. This pattern control is performed as follows.

First, ECU 50 determines whether object 210 to which the highest priority was assigned in Step ST170 exists either on the right side or the left side with respect to the vehicle center axis. In the example of Fig. 5A, ECU 50 determines that object 210 exists on the right side. Next, ECU 50 calculates a light-distribution angle to direct the UV light illuminated from a UV light device on the side according to the determination (that is, the right-side UV light device 90 in the example of Fig. 5A) to object 210. Then, actuator 70 rotates adjustable reflector 82 based on the light-distribution angle calculated by ECU 50 to illuminate object 210 with the UV light from UV light device 90. Further, ECU 50 specifies object 220 to which the highest priority was assigned on the opposite side of the determination (that is, on the left side in the example of Fig. 5A), and calculates a light-distribution angle to direct the UV light illuminated from left-side UV light device 80 to object 220. Then, actuator 60 rotates adjustable reflector 82 based on the light-distribution angle calculated by ECU 50 to illuminate object 220 with the UV light from UV light device 80.

### UV-ILLUMINATION PATTERN #6

As shown in Fig. 5B, in UV-illumination pattern #6, a center-of-gravity position 300 of objects 210-280 that exist ahead of the vehicle is illuminated by UV light devices 80 and 90 on both the left-and-right sides. This pattern control is performed as follows.

First, ECU 50 calculates the center-of-gravity position 300 of objects 210-280 to be UV-illuminated. As used herein, the term "center-of-gravity position" means a barycentric coordinate point of the object group in a coordinate system of a plane parallel to a traveling road surface indicated by an axis along the vehicle's longitudinal center line and an axis along the vehicle's transverse center line.

Next, ECU 50 calculates light-distribution angles to direct the UV lights illuminated from UV light devices 80 and 90 to center-of-gravity position 300. Then, the actuators 60 and 70 rotate adjustable reflectors 82 based on the light-distribution angles calculated by ECU 50 to illuminate center-of-gravity position 300 with the UV light from UV light devices 80 and 90.

It should be understood that the number and/or location of the UV light(s) may be varied to be one or three or more depending on the circumstances. Moreover, the object detection and/or the priority determination may be performed in any other suitable manner.

As described above, the vehicle operation support system for the vehicle according to the embodiments may be capable of changing or modifying or controlling the direction and/or the spread of the UV light illumination as needed. In this case, a driver's visibility over an obstacle in proximity to the vehicle may be improved. More specifically, the device may change the illumination direction (particularly corresponding to the center or median line of the light conus being irradiated), illumination range or spread (particularly the angular distribution or width with respect to the illumination direction), and/or illumination intensity of the UV light from UV light devices 80 and/or 90 in accordance with the object detection. Thus, the driver's visibility may be improved compared with a case where the direction of the UV light illumination is preset and fixed in advance.

Further, UV-headlights 80 and 90 may be provided in or near a front portion of the vehicle particularly on the left and right sides, respectively, and actuators 60 and 70 may be provided to change the illumination directions and/or spreads of UV-headlights 80 and 90, respectively. In this case, as shown in illumination patterns #1 through #6, the illumination directions of the UV-headlights 80 and 90 on the left and right sides may be separately controlled. In the embodiments, the illumination patterns #1 through #6 solely show examples of the pattern controls according to the invention. Therefore, other various illumination patterns may also be realized.

The invention may be useful for a vehicle operation support system that is applied to improve the driver's visibility, especially, the driver's night visibility of pedestrians and obstacles that may exist forward of the vehicle. Particularly, the vehicle may be equipped with at least one UV light which irradiates the ambient environment with UV radiation. In some examples, the direction, angular width in lateral and/or vertical direction and/or the intensity of UV radiation may be changed in response to vehicle and environment variables.

## Claims

1. A method of improving a driver's visibility of the environment outside a vehicle equipped with at least one UV light (80, 90) which irradiates the ambient environment of said vehicle with UV radiation, the method comprising:
irradiating the ambient environment of said vehicle with UV radiation from said UV light (80, 90); and
changing a direction and/or angular distribution of irradiation of said UV radiation.

2. The method as described in claim 1 wherein said vehicle is equipped with at least one sensor (20; 30) which can detect at least one object (210, 220, 230, 240, 250, 260) in the ambient environment of said vehicle; and
wherein said changing the direction and/or angular distribution of irradiation of UV radiation includes changing the direction and/or angular distribution according to a detection result of said sensor (20; 30).

3. The method as described in claim 2, further comprising determining a collision possibility of the object with said vehicle detected by said sensor (20, 30);
wherein said changing the direction and/or angular distribution of irradiation of said UV radiation includes directing the direction and/or angular distribution to said object (210; 220, 230, 240, 250, 260) upon it being determined that the object (210, 220, 230, 240, 250, 260) has a specified degree of the collision possibility with the vehicle.

4. The method as described in any one of claims 2 or 3, further comprising changing an intensity of said UV radiation reaching said object (210, 220, 230, 240, 250, 260) detected by said sensor (20, 30) according to a determined type of said object (210, 220, 230, 240, 250, 260).

5. The method as described in claim 4, wherein said intensity of said UV radiation reaching said object (210, 220, 230, 240, 250, 260) is set to a first intensity when said object (210, 220, 230, 240, 250, 260) is not determined to be a pedestrian and wherein said intensity is set to a second intensity that is lower than said first intensity when said object (210, 220, 230, 240, 250, 260) is determined to be a pedestrian.

6. The method as described in any one of claims 2 through 5, wherein changing the direction and/or angular distribution of irradiation of said UV radiation irradiated from said UV light occurs when a plurality of objects (210, 220, 230, 240, 250, 260) are detected by said sensor (20; 30).

7. The method as described in claim 6, further comprising setting an order of priority for each object according to a degree of risk of collision of each object (210, 220, 230, 240, 250, 260) with said vehicle;
wherein said changing the direction and/or angular distribution of irradiation of said UV radiation includes changing the direction and/or angular distribution according to said order of priority of each object (210, 220, 230, 240, 250, 260).

8. The method as described in claim 7, wherein selecting at least one object (210, 230) from said plurality of objects (210, 220, 230, 240, 250, 260) on the basis of said order of priority; and
wherein said changing the direction and/or angular distribution of irradiation of said UV radiation includes directing said UV radiation to selected objects (210, 230).

9. The method as described in claim 6, further comprising calculating the center position (300) of said plurality of objects (210, 220, 230, 240, 250, 260) along a vehicle width direction and/or a vehicle longitudinal direction;
wherein said changing the direction and/or angular distribution of irradiation of said UV radiation includes directing said UV radiation to said center position (300).

10. The method as described in any one of claims 2 through 9, wherein the changing the angular distribution of the UV radiation comprises expanding the irradiation range of said UV radiation when a plurality of objects (210, 220, 230, 240, 250, 260) are detected by said sensor (20, 30).

11. The method as described in any one of the preceding claims, wherein said vehicle is equipped at least with a right UV light (90) on a right-hand side of a vehicle body and a left UV light (80) on a left-hand side of said vehicle body, the method further comprising:
determining whether said object detected is on a right-hand side of said vehicle or on a left-hand side of said vehicle;
wherein irradiating said object (210) on the right-hand side is accomplished with UV radiation from said right UV light (90) and irradiating said object (230) on the left-hand side is accomplished with UV radiation from said left UV light (80).

12. A vehicle operation support system, comprising:
at least one UV light (80, 90) irradiating an ambient environment of a vehicle;
at least one actuator (60, 70) capable of changing a direction and/or angular distribution of UV irradiation from the UV light (80, 90); and
a controller (50) configured to control said at least one actuator.

13. The system as described in claim 12, further comprising:
at least one sensor (20, 30) which detects an object (210, 220, 230, 240, 250, 260) in the ambient environment of said vehicle and that is capable of communicating with said controller (50);
wherein said controller (50) is configured to control said actuator (60, 70) according to an input from said sensor (20, 30).

14. The system as described in claim 13, wherein said controller (50) is configured to determine a collision possibility of the object (210, 220, 230, 240, 250, 260) detected by said sensor (20, 30) with said vehicle, and wherein the controller (50) controls said actuator (60, 70) such that said direction and/or angular distribution of irradiation is directed to said object (210, 220, 230, 240, 250, 260) upon determining that the object (210, 220, 230, 240, 250, 260) has a specified degree of collision possibility.

15. The system as described in claim 13 or 14, further comprising:
an intensity changing mechanism (85) for changing an intensity of said UV radiation reaching said object (210, 220, 230, 240, 250, 260) detected by said sensor (20, 30); wherein said controller (50) is configured to determine a type of said object (210, 220, 230, 240, 250, 260) and is configured to control said intensity changing mechanism (85) according to the determined type of object (210, 220, 230, 240, 250, 260).

16. The system as described in claim 15, wherein said controller is configured to determine whether said object detected by said sensor (20, 30) is a pedestrian or not, and to control said intensity changing mechanism (85) such that an intensity of said UV radiation reaching said object (210, 220, 230, 240, 250, 260) is set to a first intensity when said object (210, 220, 230, 240, 250, 260) is not determined to be a pedestrian and said intensity is set to a second intensity that is lower than said first intensity when said object (210, 220, 230, 240, 250, 260) is determined to be a pedestrian.

17. The system as described in any one of claims 13 through 16, wherein said controller is configured to change said actuator control when a plurality of objects (210, 220, 230, 240, 250, 260) are detected by said sensor (20, 30).

18. The system as described in claim 17, wherein said controller (50) is configured to set an order of priority for each object (210, 220, 230, 240, 250, 260) according to a degree of risk of collision with the vehicle when a plurality of objects (210, 220, 230, 240, 250, 260) are detected by said sensor (20, 30), and to change the direction and/or angular distribution of irradiation of said UV radiation according to said order of priority for each object (210, 220, 230, 240, 250, 260).

19. The system as described in claim 18, wherein said controller (50) is configured to select at least one object (210, 230) from said plurality of objects (210, 220, 230, 240, 250, 260) on the basis of said order of priority and to direct said UV radiation to selected objects (210, 230).

20. The system as described in claim 17, 18 or 19, wherein said controller (50) is configured to calculate the center position (300) of said plurality of objects (210, 220, 230, 240, 250, 260) along a vehicle width direction and/or a vehicle longitudinal direction and to direct said UV radiation to said center position (300).

21. The system as described in claim 17 or 20, wherein said controller (50) is configured to expand the irradiation range of said UV radiation when a plurality of objects (210, 220, 230, 240, 250, 260) are detected by said sensor (20, 30).

22. The system as described in claims 12 through 21, wherein a right UV light (90) which irradiates a vehicle right side front area with UV radiation is provided on a right-hand side of a vehicle front body, a left UV light (80) which irradiates a vehicle left side front area with UV radiation is provided on a left-hand side of said vehicle front body, the system further comprising:
a first actuator (70) capable of changing the direction and/or angular distribution of said UV radiation from said right UV light (90); and
a second actuator (60) capable of changing the direction and/or angular distribution of said UV radiation from said left UV light (80).

23. The system as described in claim 22 wherein said controller (50) is configured to determine whether said object (210, 220, 230, 240, 250, 260) is on a right-hand side of said vehicle or a on a left-hand side of said vehicle, to control said first actuator (70) such that said first UV light (90) irradiates said object (210) when said object(210) is on the right-hand side of said vehicle and to control said second actuator (60) such that said second UV light (80) irradiates said object (230) when said object (230) is on the left-hand side of said vehicle.
